# EUROPEAN PATENT SPECIFICATION

(11) **EP 4 167 423 B1**
(45) Date of publication and mention of the grant of the patent: **01.04.2026**
(21) Application number: 20945559.1
(22) Date of filing: 13.11.2020
(51) Int. Cl.: H02J 7/00, H02J 3/32, H01M 10/42, H02J 7/32, H02J 7/34, H01M 10/44, H01M 10/48

(54) **ENERGY STORAGE SYSTEM**
ENERGIESPEICHERSYSTEM
SYSTÈME DE STOCKAGE D'ÉNERGIE

(30) Priority: 15.07.2020 CN 202010683032
(43) Date of publication of application: 19.04.2023
(73) Proprietor: Huawei Digital Power Technologies Co., Ltd., Shenzhen, Guangdong 518043 (CN)
(72) Inventor: WANG, Zhaohui, Shenzhen, Guangdong 518129 (CN); ZHOU, He, Shenzhen, Guangdong 518129 (CN); SHI, Lei, Shenzhen, Guangdong 518129 (CN)
(74) Representative: Isarpatent
(86) International application number: PCT/CN2020/128604
(87) International publication number: WO 2022/011904

(56) References cited:
- CN-A- 102 664 432
- CN-A- 104 993 602
- CN-A- 105 703 439
- CN-A- 106 972 583
- CN-A- 110 661 314
- US-A1- 2009 066 291
- US-A1- 2009 066 291
- US-A1- 2017 070 073
- US-A1- 2018 175 640

## Description

### TECHNICAL FIELD

This disclosure relates to the field of battery energy storage technologies, and in particular, the invention relates to an energy storage system and a control method therefor.

### BACKGROUND

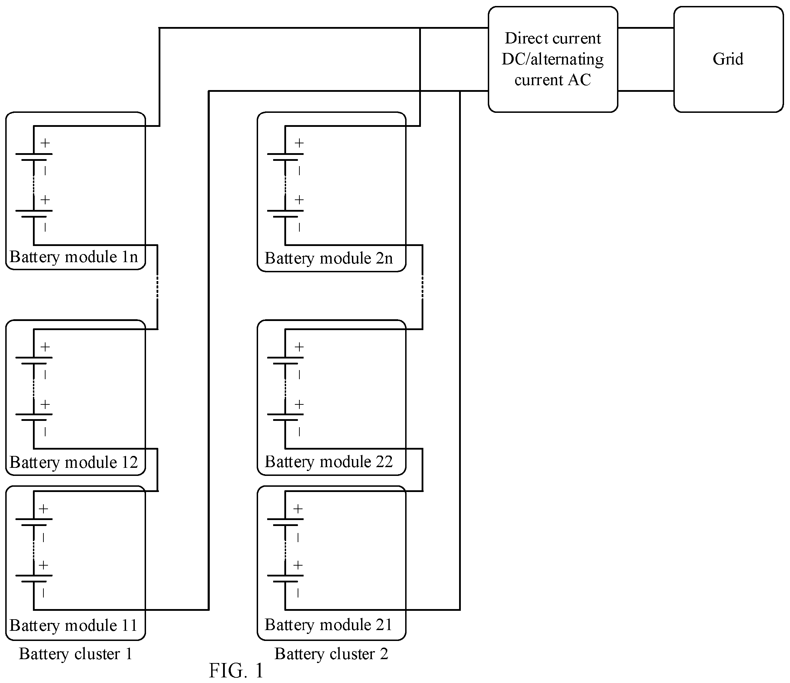

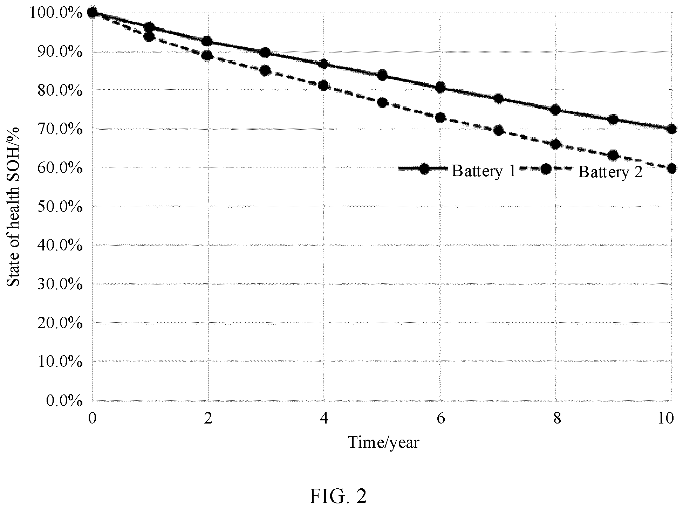

To overcome severe intermittency of large-scale photovoltaic power generation and wind power generation, and with a rapid decrease in battery costs, battery energy storage has been rapidly developed both on a power generation side and on a power consumption side due to its features such as application flexibility, controllability, and high energy density. A voltage of an individual battery module is usually relatively low, and a requirement for large-scale energy storage cannot be met even if a plurality of battery modules are connected in series. Therefore, to strive for a trade-off between cost and performance, as shown in FIG. 1, a common practice in the industry is to connect a plurality of battery modules (battery module, BM) (such as a battery module 11 to a battery module 1n, and a battery module 21 to a battery module 2n) in series to obtain a plurality of battery clusters (such as a battery cluster 1 and a battery cluster 2), and connect the plurality of battery clusters in parallel, which then share a direct current (direct current, DC)/alternating current (alternating current, AC) inverter to implement energy exchange between energy storage batteries in large-scale energy storage and the grid. However, a state of health (state of health, SOH) of a battery decreases continuously over use time, and a storage capacity of the battery also decreases year by year. Due to differences between individual batteries, states of health of different batteries are also increasingly discrete. As shown in FIG. 2, states of health of a battery 1 and a battery 2 gradually decrease over use time of the batteries. In the tenth year, the SOH of the battery 1 is 70%, the SOH of the battery 2 is 60%, and states of health of the battery 1 and the battery 2 have a difference of 10%. Due to the series connection between the battery modules, battery modules in a same battery cluster have the same charge/discharge time, while a difference between the battery modules increases. To ensure safety and availability of any battery module in an individual cluster of batteries, a limitation brought by a bottleneck battery module needs to be considered, and the entire cluster of batteries is used in a lower capacity, which causes a waste of batteries. Simple parallel connection of the battery clusters causes inconsistent charging and discharging between the different battery clusters due to different battery internal resistances and battery port voltages. Consequently, battery utilization is limited.

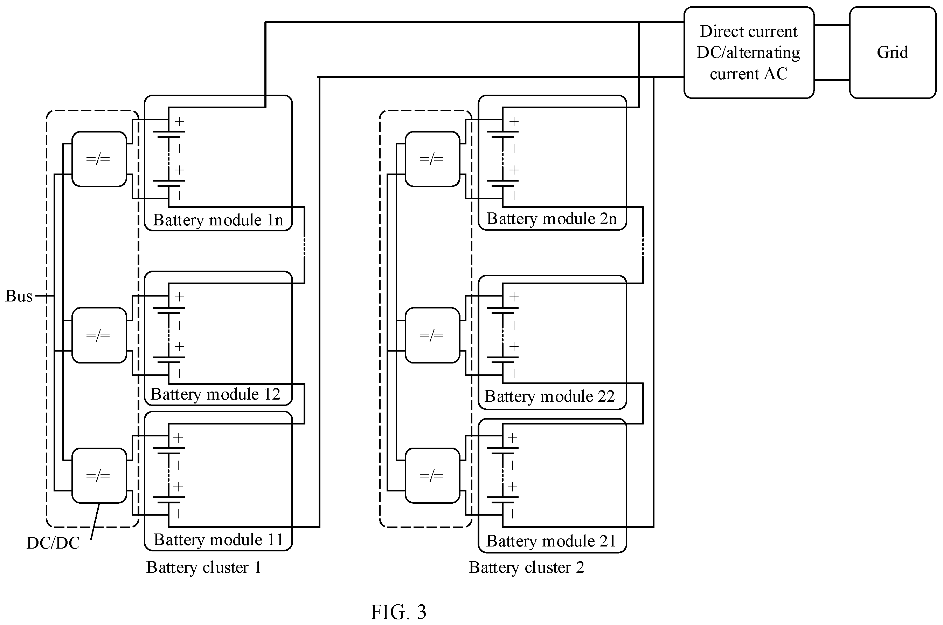

In research and practice, the inventors of this application find that, to resolve battery differences between batteries, as shown in FIG. 3, the prior art is introducing a DC/DC converter into each battery module, where DC/DC converters of battery modules in a same battery cluster share a bus. The DC/DC converters of the battery modules are used to implement energy management, compensating for the differences caused by battery attenuation. As shown in FIG. 3, DC/DC converters of battery modules in a battery cluster 1 share a bus, and DC/DC converters of battery modules in a battery cluster 2 share a bus. However, the prior art cannot resolve differences between the battery clusters. In addition, due to the introduction of the DC/DC converters, additional wiring is required to implement energy transfer between different battery modules, which results in high wiring complexity and error probability. Consequently, the delivery of an energy storage system is difficult, the delivery quality cannot be ensured, and the applicability is poor.
US 2017/070073 A1 relates to approach for managing energy storage devices within an array, introducing a system that allegedly allows for the individual control of these devices through an Energy Storage Regulation Unit (ESRU). US 2018/175640 A1 relates to a battery control system that includes a fusible switch mechanism designed to automatically exclude faulty battery cells and replace them with operational ones to maintain consistent power flow and battery pack integrity.
US 2009/066291 A1 relates to a distributed energy storage control system (DESCS) that allegedly leverages a master-slave configuration to enhance energy storage management efficiency.
CN 106972583 A relates to a battery charge and discharge control system designed for allegedly enhancing the efficiency of battery packs by dynamically selecting and switching between battery cells based on their parameters.

### SUMMARY

The object of the present invention is to provide an energy storage system and a control method therefor, which can improve flexibility in management of the energy storage system, enhance stability of the energy storage system, and provide higher applicability. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, this application provides an energy storage system according to claim 1. The energy storage system includes at least one energy storage unit cluster and a centralized monitoring system of the energy storage unit cluster. It may be understood that if the energy storage system includes more than one energy storage unit cluster, one energy storage unit cluster corresponds to one centralized monitoring system. Any energy storage unit cluster includes at least two energy storage modules connected in series, one of which includes one energy storage element group and one switch bridge arm, and the switch bridge arm includes a master control switch and a bypass switch, where one terminal of the master control switch is connected to the energy storage element group, and the other terminal of the master control switch is used as a first input/output terminal of the energy storage module; one terminal of the bypass switch is connected to the first input/output terminal, and the other terminal of the bypass switch is connected to a second input/output terminal of the energy storage module. One energy storage unit cluster is coupled to a direct current busbar through one DC/DC converter. The centralized monitoring system of the energy storage unit cluster is connected to the energy storage unit cluster through a control bus and is configured to control a master control switch and a bypass switch of any energy storage module in the energy storage unit cluster to be on or off to access or bypass the any energy storage module. In this application, each energy storage unit cluster is coupled to the direct current busbar through a DC/DC converter to implement simple parallel expansion of a plurality of energy storage unit clusters, which can increase an energy storage capacity of the energy storage system. By means of the DC/DC converter, flexible control of energy of an individual energy storage unit cluster and fast switching of an individual energy storage unit cluster in an anomalous condition can also be implemented, providing strong applicability. By means of the switch bridge arm in the energy storage module, in combination with an energy management capability of the DC/DC converter connected to the energy storage unit cluster in which the energy storage module is located, flexible control of an individual energy storage module can be implemented, and management flexibility and stability of the energy storage system can be improved, providing high applicability.

With reference to the first aspect, in a first possible implementation, the centralized monitoring system of the energy storage unit cluster is integrated into the DC/DC converter, which can simplify a system structure of the energy storage system. In addition, because the energy storage unit cluster is usually installed in close proximity to the DC/DC converter, integrating the centralized monitoring system of the energy storage unit cluster into the DC/DC converter facilitates connection of the control bus, providing higher applicability. Herein, the DC/DC converter may be a bidirectional DC/DC converter, and a circuit topology of the bidirectional DC/DC converter may be a non-isolated circuit topology. A boost ratio of the bidirectional DC/DC converter is determined by a voltage of the direct current busbar and a port voltage of the energy storage unit cluster.

With reference to the first possible implementation of the first aspect, in a second possible implementation, one of the at least two energy storage modules further includes a battery management unit BMU. The centralized monitoring system of the energy storage unit cluster is connected to a BMU of each energy storage module in the energy storage unit cluster through the control bus, and controls, by using a BMU of any energy storage module, a master control switch and a bypass switch of the any energy storage module to be on or off, providing simple operation and high applicability.

With reference to the second possible implementation of the first aspect, in a third possible implementation, the master control switch and the bypass switch of the any energy storage module are integrated into the BMU of the any energy storage module, which can simplify the system structure of the energy storage system and also improve control flexibility of the switch bridge arm of the energy storage module, providing higher applicability.

With reference to the third possible implementation of the first aspect, in a third possible implementation, the master control switch and the bypass switch of the any energy storage module in the energy storage unit cluster are in an off state, which can improve maintenance safety of the energy storage system.

With reference to the fourth possible implementation of the first aspect, in a fifth possible implementation, a power supply module of the BMU of the any energy storage module supplies power via an energy storage element group of the any energy storage module or the control bus, providing flexible operation, so that a control capability of the energy storage module can be ensured, and normal operation of the entire battery cluster is not affected even when the energy storage module is in the bypass state, providing high applicability.

With reference to the fifth possible implementation of the first aspect, in a sixth possible implementation, the centralized monitoring system of the energy storage unit cluster is configured to: when the energy storage system is started, control, by using the BMUs of the energy storage modules in the energy storage unit cluster, master control switches of the energy storage modules to be on one by one. In this application, when master control switches and bypass switches of the battery modules in the energy storage unit cluster are in an off state, the centralized monitoring system of the energy storage unit cluster controls, by using the BMUs of the energy storage modules, the master control switches S1 of the energy storage modules to be on one by one, so that the port voltage of the energy storage unit cluster increases stepwise, and a current surge of the energy storage unit cluster can be reduced. In this way, a soft start circuit of the DC/DC converter can be significantly simplified, and even no soft start circuit is required, providing simple operation and high applicability.

With reference to the sixth possible implementation of the first aspect, in a seventh possible implementation, the BMU of the any energy storage module is configured to: upon detecting that a port voltage for charging or discharging of the energy storage element group in the any energy storage module is equal to a protection voltage threshold, turn off the master control switch of the any energy storage module and turn on the bypass switch of the any energy storage module. In this application, the switch bridge arm of each energy storage module can be controlled by using the BMU of the energy storage module, so as to implement cutting in or out of an individual energy storage module, providing flexible operation and high applicability.

With reference to the sixth possible implementation of the first aspect, in an eighth possible implementation, the BMU of the any energy storage module is configured to: upon detecting that the energy storage element group in the any energy storage module has an anomaly, turn off the master control switch of the any energy storage module and turn on the bypass switch. Herein, the anomaly of the energy storage element group includes: a state of health SOH of the energy storage element group is less than an SOH threshold, a short circuit occurs in the energy storage element group, or over-temperature occurs in the energy storage element group. In this application, the switch bridge arm of each energy storage module is controlled by using the BMU of the energy storage module, which can automatically cut out a faulty energy storage module while ensuring normal operation of the energy storage unit cluster and even the energy storage system, providing flexible operation and high applicability.

With reference to the seventh possible implementation of the first aspect or the eighth possible implementation of the first aspect, in a ninth possible implementation, the BMU of the any energy storage module is configured to send a current adjustment request to the centralized monitoring system. The centralized monitoring system is configured to: upon receiving the current adjustment request, control the DC/DC converter to reduce a battery charge/discharge current of the energy storage unit cluster. The BMU of the any energy storage module is further configured to: upon detecting that the battery charge/discharge current is equal to a preset current threshold, turn off or on the master control switch or the bypass switch of the any energy storage module, which can implement smooth cutting in or out of the energy storage module while protecting highly reliable operation of a switching component, providing high applicability.

With reference to the ninth possible implementation of the first aspect, in a tenth possible implementation, the preset current threshold is 50%, 20%, or 10% of a rated operating current of the energy storage unit cluster.

With reference to the sixth possible implementation of the first aspect, in an eleventh possible implementation, the BMU of the any energy storage module is further configured to: upon detecting no control signal of the centralized monitoring system, turn off the master control switch and the bypass switch of the any energy storage module, so that an output of the energy storage module is in a high-impedance state, thereby preventing the energy storage module from affecting normal operation of the battery cluster, improving stability of the energy storage system, and providing high applicability.

With reference to the first aspect to the tenth possible implementation of the first aspect, in a twelfth possible implementation, the switch bridge arm is a low-voltage metal-oxide-semiconductor field-effect transistor MOSFET, and a voltage of the low-voltage MOSFET includes 60 V, 80 V, 100 V, 120 V, 150 V, or 200 V. In this application, the low-voltage MOSFET has a low on-resistance, and the switch bridge arm uses the low-voltage MOSFET, which can reduce conduction loss in an on state. In addition, the low-voltage MOSFET can operate in a synchronous rectification state, which can implement a low on-resistance in both a charge process and a discharge process, providing high applicability.

### BRIEF DESCRIPTION OF DRAWINGS

FIG. 1 is a schematic diagram of a structure of an energy storage system;
FIG. 2 is a schematic diagram of a curve for a relationship between a state of health and use time of a battery;
FIG. 3 is another schematic diagram of a structure of an energy storage system;
FIG. 4 is a schematic diagram of a structure of an energy storage system according to this application;
FIG. 5a is a schematic diagram of a structure of a battery module according to this application;
FIG. 5b is another schematic diagram of a structure of a battery module according to this application;
FIG. 6 is another schematic diagram of a structure of an energy storage system according to this application;
FIG. 7 is a schematic diagram of a connection between a battery cluster and a DC/DC converter in an energy storage system according to this application;
FIG. 8 is a schematic diagram of changes in a port voltage of a battery cluster in an energy storage system according to this application;
FIG. 9 is another schematic diagram of a structure of an energy storage system according to this application; and
FIG. 10 is a schematic diagram of changes in battery parameters during switching between battery modules in a battery cluster.
In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

An energy storage system provided in this application is applicable to a plurality of types of power generation devices such as a photovoltaic power generation device or a wind power generation device, and may be applied to the automotive field, and the like. The energy storage system provided in this application is applicable to energy storage of different types of energy storage elements. Herein, the different types of energy storage elements may include a lithium ion battery, a lead-acid battery (or referred to as a lead-acid battery), a supercapacitor (also referred to as an electrochemical capacitor), and the like. A specific type of the energy storage element is not specifically limited in this application. For ease of description, the energy storage system provided in this application is described by using a battery as an example.

For large-scale photovoltaic power generation or wind power generation, a power grid voltage is usually relatively high, for example, an alternating voltage from 400 V to 800 V. Consequently, a direct current-side voltage ranges from 550 V to 1500 V. However, a voltage of a single battery module is usually relatively small. For example, the voltage of the single battery module is usually less than 60 V. To meet a power grid voltage requirement, a plurality of battery modules are usually directly connected in series to obtain a high voltage. In the energy storage system provided in this application, a battery module may be a battery pack, and a battery pack may include one or more battery units (the battery unit may be a battery cell or the like, and a voltage of the battery unit is usually between 2.5 V and 4.2 V) connected in series or parallel, to form the smallest energy storage and management unit. For ease of description, the following uses the battery module as an example for description. In other words, in the energy storage system provided in this application, the battery module is the smallest energy storage and management unit that includes one or more battery units connected in series or parallel, which is not repeated below. The energy storage system provided in this application features a simple structure and high safety and can improve flexibility in control of the energy storage modules in the energy storage system and effective utilization of the energy storage modules, enhancing management effectiveness of the energy storage modules and providing strong applicability.

### Structure of an energy storage system:

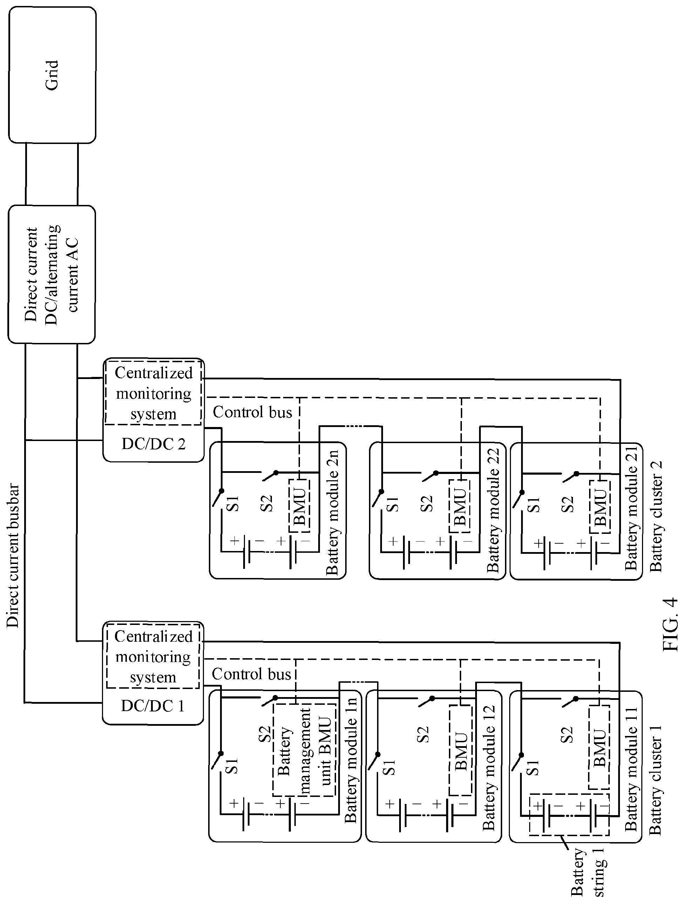

FIG. 4 is a schematic diagram of a structure of an energy storage system according to this application. The energy storage system provided in this application includes one or more energy storage unit clusters (namely, at least one energy storage unit cluster). One energy storage unit cluster may include at least two energy storage modules, and the energy storage modules are connected in series. In other words, one energy storage unit cluster may include at least two energy storage modules connected in series. In this application, various types of energy storage elements are described by using a battery as an example, the energy storage unit cluster is described by using a battery cluster as an example, and the energy storage module is described by using a battery module as an example. Details are not described below. As shown in FIG. 4, in the energy storage system provided in this application, the one or more energy storage unit clusters may be, for example, a battery cluster 1 and a battery cluster 2. The battery cluster 1 may include a battery module 11 to a battery module 1n connected in series, and the battery cluster 2 may include a battery module 21 to a battery module 2n connected in series, where n is an integer.

In some feasible implementations, each battery cluster in the energy storage system may be coupled to a direct current busbar through a DC/DC converter, and one battery cluster is coupled to the direct current busbar through one DC/DC converter. As shown in FIG. 4, the battery cluster 1 may be coupled to the direct current busbar through a converter DC/DC 1, and the battery cluster 2 may be coupled to the direct current busbar through a converter DC/DC 2. Each battery cluster is coupled to the direct current busbar through a DC/DC converter to implement simple parallel expansion of a plurality of battery clusters, which can increase an energy storage capacity of the energy storage system. By means of the DC/DC converter, flexible control of energy of an individual battery cluster and fast switching of an individual battery cluster in an anomalous condition can also be implemented, providing strong applicability.

Herein, the DC/DC converter may be a bidirectional DC/DC converter, and a circuit topology of the bidirectional DC/DC converter may be an isolated circuit topology or a non-isolated circuit topology. A boost ratio of the bidirectional DC/DC converter is determined by a voltage of the direct current busbar and a port voltage of the battery cluster. For example, for the battery cluster 1, due to changes in a port voltage of a battery with an energy storage capacity and a state of charge (state of charge, SOC) of the battery, a port voltage of the battery cluster 1 varies with a quantity of battery modules connected in series in the battery cluster 1. Therefore, when the quantity of battery modules connected in series in the battery cluster 1 varies greatly, the port voltage of the battery cluster 1 also varies greatly. For example, assuming that a port voltage of the battery module is 50 V, when two battery modules are connected in series in the battery cluster 1, the port voltage of the battery cluster 1 is 100 V, and when 30 battery modules are connected in series in the battery cluster 1, the port voltage of the battery cluster 1 is 1500 V, that is, an upper limit of the voltage of a low-voltage system. Therefore, the port voltage of the battery cluster 1 may be an output voltage in a wide range, for example, 100 V to 1500 V. To match a variation range of the port voltage of the battery cluster 1, the converter DC/DC 1 may usually be implemented by a non-isolated circuit topology and may be designed as a converter having a wide range of input/output capabilities. This can flexibly adapt to different input/output voltages. Herein, the circuit topology of the bidirectional DC/DC converter (including the converter DC/DC 1, the converter DC/DC 2, and the like) may be a boost circuit (boost circuit), a flying-capacitor boost circuit (boost circuit boost circuit), a flying-capacitor multilevel circuit (flying capacitor multilevel circuit), a positive-negative symmetric three-level boost circuit (three-level boost circuit), a four-switch buck-boost circuit (four-switch buck-boost circuit), and the like, which may be specifically determined based on a requirement of an actual application scenario and is not limited herein. A boost ratio of the converter DC/DC 1 may be determined by the voltage of the direct current busbar and the port voltage of the battery cluster 1, which may be specifically determined based on an actual application scenario and is not limited herein.

In some feasible implementations, each of the battery modules (such as the battery module 11 to the battery module 1n) in any battery cluster (such as the battery cluster 1) of the energy storage system may include one energy storage element group (that is, battery string) and one switch bridge arm including a master control switch and a bypass switch. In other words, one battery module includes one switch bridge arm. In any battery module, one terminal of a master control switch is connected to a battery string in the battery module, and the other terminal of the master control switch is used as a first input/output terminal of the battery module; one terminal of a bypass switch is connected to the first input/output terminal of the battery module, and the other terminal of the bypass switch is connected to a second input/output terminal of the battery module. For example, in the battery cluster 1, the battery module 11 may include one battery string (such as a battery string 1) and one switch bridge arm (which may be assumed as a switch bridge arm 1 for ease of description). The switch bridge arm 1 includes a master control switch S1 and a bypass switch S2. One terminal of the master control switch S1 is connected to the battery string 1, and the other terminal of the master control switch S1 is used as a first input/output terminal of the battery module 11. One terminal of the bypass switch S2 is connected to the first input/output terminal of the battery module 11, and the other terminal of the bypass switch S2 is connected to a second input/output terminal of the battery module 11. When the energy storage system charges the battery module 11, the first input/output terminal of the battery module 11 is an input terminal of the battery module 11, and the second input/output terminal of the battery module 11 is an output terminal of the battery module 11. When the battery module 11 is discharged, the first input/output terminal of the battery module 11 is an output terminal of the battery module 11, and the second input/output terminal of the battery module 11 is an input terminal of the battery module 11. Whether an input/output terminal of each battery module is used as an input terminal or an output terminal may be specifically determined based on a requirement of an actual application scenario and is not limited herein. In the battery module 11, when the master control switch S1 is on and the bypass switch S2 is off, the battery module 11 is connected to the battery cluster 1 to implement high-power charge/discharge control. When the master control switch S1 is off and the bypass switch S2 is on, the battery module 11 is cut out of the battery cluster 1, and the battery module 11 does not participate in high-power charge/discharge control. By means of the switch bridge arm in the battery module, in combination with an energy management capability of the DC/DC converter connected to the battery cluster in which the battery module is located, flexible control of an individual battery module, for example, charge/discharge management of each battery module, state-of-charge equalization, and damage bypass of the battery module, can be implemented, providing more flexible operation and higher applicability.

In some feasible implementations, to implement management of an individual battery cluster, a centralized monitoring system may be added for each battery cluster. One battery cluster corresponds to one centralized monitoring system, or a plurality of battery clusters correspond to one centralized monitoring system, which may be specifically determined based on an actual application scenario and is not limited herein. For example, the battery cluster 1 may correspond to a centralized monitoring system in the converter DC/DC 1, which may be, for example, a centralized monitoring system 1 for ease of description. The battery cluster 2 may correspond to a centralized monitoring system in the converter DC/DC 2, which may be, for example, a centralized monitoring system 2 for ease of description. The centralized monitoring system of each battery cluster may be connected to battery modules in the battery cluster through a control bus, and the centralized monitoring system may perform real-time information interaction with the battery modules in the battery cluster, and may implement real-time and unified monitoring of the battery modules in the battery cluster, thereby implementing flexible control of the energy storage system and providing strong applicability. Optionally, when the centralized monitoring system is an independently arranged circuit module, the centralized monitoring system corresponding to the individual battery cluster implements information interaction with a controller in the DC/DC converter, and the centralized monitoring system is connected to the battery modules in the battery cluster through a control bus. In a specific implementation, a manner of information interaction between the centralized monitoring system and the battery module may alternatively be wireless communication, direct current power carrier communication, or the like, which may be specifically determined based on an actual application scenario. The operation is flexible and the energy storage system has high applicability. Optionally, when the centralized monitoring system of the individual battery cluster is integrated into the DC/DC converter connected to the battery cluster as a separate circuit board or circuit module, a system structure of the energy storage system can be simplified. In addition, because the individual battery cluster is usually installed in close proximity to the DC/DC converter, integrating the centralized monitoring system of the individual battery cluster into the DC/DC converter facilitates connection of the control bus. The centralized monitoring system of each battery cluster is connected to the battery modules of each battery cluster through the control bus, so as to control a master control switch and a bypass switch in any battery module of the battery cluster to be on or off to access or bypass the battery module. Optionally, the centralized monitoring system may be arranged in a battery module, to implement management of the entire battery cluster. In this application, a physical arrangement location of the centralized monitoring system is not specifically limited. The centralized monitoring system may directly control the switch bridge arm in each battery module through the control bus. For example, the centralized monitoring system may send a switch control signal through the control bus to control a master control switch and a bypass switch of the switch bridge arm in each battery module to be on or off. Herein, the switch control signal may be a pulse width modulation (pulse width modulation, PWM) signal, or may be a binary signal of 0 or 1, or may be any other signal that can be used to control a switch to be on or off, which may be specifically determined based on an actual application scenario and is not limited herein. Optionally, the centralized monitoring system may also control the switch bridge arm in each battery module in an indirect communication manner. For example, the centralized monitoring system may send a control signal to each battery module, and then a battery management unit in each battery module controls the switch bridge arm.

Optionally, in some feasible implementations, to implement status monitoring and control of the battery module, a battery management unit (battery management unit, BMU) may be added to the battery module of each battery cluster. The BMU may include a modular battery management system (module battery management system, mBMS), and a corresponding sampling control module, communications module, power supply module, driving control circuit of the switch bridge arm, and the like, and is configured to implement status detection and control of each energy storage element group (that is, each battery string) in the battery module. Optionally, the switch bridge arm in any battery module may be integrated into the BMU in the battery module, and the BMU controls the master control switch and the bypass switch in the switch bridge arm to be on or off. The centralized monitoring system of the battery cluster 1 may be connected to the BMU of each battery module in the battery cluster through the control bus and may send a control signal to the BMU of each battery module. The BMU of each battery module controls a master control switch and a bypass switch in the battery module to be on or off. As shown in FIG. 4, the centralized monitoring system 1 of the battery cluster 1 may be connected to the BMU of each of the battery module 11 to the battery module 1n through the control bus, and the BMU of each battery module controls a master control switch and a bypass switch of each battery module to be on or off. For example, the centralized monitoring system 1 may use the BMU in the battery module 11 to control a master control switch and a bypass switch of the switch bridge arm 1 to be on or off. In other words, the BMU in the battery module 11 controls the master control switch S1 and the bypass switch S2 to be on or off.

### Structure of a battery module:

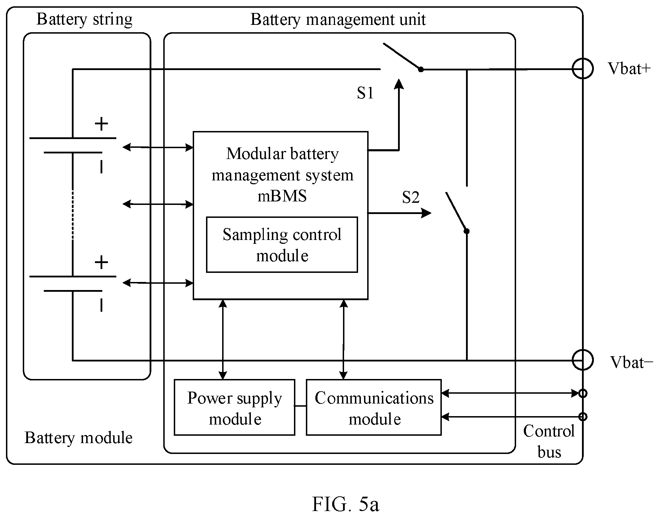

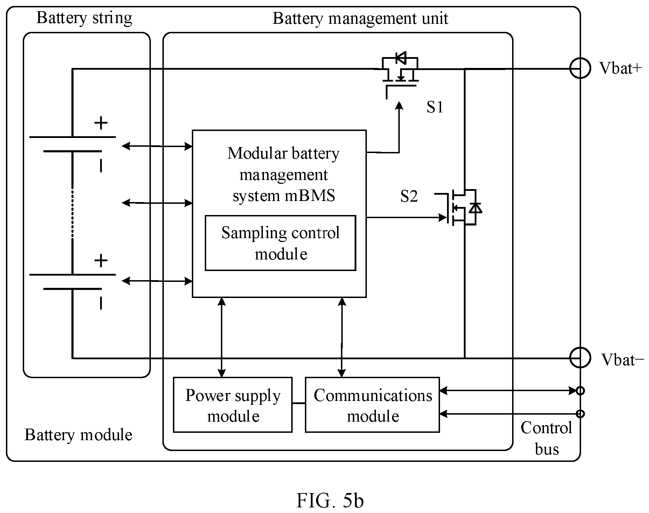

For ease of description, the following provides an example description of main components of the battery module in the energy storage system provided in this application with reference to FIG. 5a and FIG. 5b. Herein, the battery module may be any battery module in any battery cluster in the energy storage system, for example, any one of the battery module 11 to the battery module 1n and the battery module 21 to the battery module 2n. For ease of description, the following directly uses a battery module as an example for description. Referring to FIG. 5a, FIG. 5a is a schematic diagram of a structure of a battery module according to this application. In the energy storage system provided in this application, the battery module includes a battery string, a switch bridge arm, and a BMU, where the switch bridge arm may be integrated into the BMU. The battery string includes one or more battery units (a voltage of the battery unit generally ranges from 2.5 V to 4.2 V) connected in series and in parallel, and usually includes 10 to 20 battery units that are directly connected in series. The BMU is usually integrated onto a circuit board, implements status detection and control of the battery units (or referred to as battery cells) in the battery string, and also implements control of the entire battery module. The BMU may include an mBMS, and a corresponding sampling control module, power supply module, communications module, switch bridge arm, and driving control circuit (not shown in the figure) of the switch bridge arm, where the switch bridge arm includes two master control switches S1 and a bypass switch S2. Optionally, a switch bridge arm in any battery module may be separately arranged on a power board and is controlled by a separate controller, and the controller and the mBMS implement information interaction through a communications bus. In addition, the switch bridge arm on the power board may be controlled by the centralized monitoring system by directly sending a switch control signal through a control bus, which can improve a response speed of the centralized monitoring system. Due to physical separation of the power board from the mBMS board, flexible processing of a board can be implemented, and decoupling of the power board from a control board is implemented, which enhances circuit reliability and reduces diffusion of a fault caused by a power circuit. In this application, a specific situation of the switch bridge arm and the controller may be determined based on an actual application scenario and is not limited herein.

In some feasible implementations, the power supply module of the BMU of the battery module may draw power from the battery string of the battery module, so as to supply power to the sampling control module and the communications module of the mBMS. In other words, the power supply module of the BMU of the battery module may supply power via the battery string of the battery module. Optionally, the power supply module of the BMU of the battery module may alternatively supply power via the control bus. In other words, the power supply module of the BMU of the battery module may draw power via the control bus, so as to supply power to the sampling control module and the communications module of the mBMS. When the battery string of the battery module is damaged or an SOH of the battery string is very low, the battery string cannot provide enough energy to the function modules in the BMU. In this case, the power supply module of the battery module may supply power via the control bus by using an external power supply, so as to maintain turning on the bypass switch S2 in the switch bridge arm of the battery module to bypass the battery module. In this case, even if the battery module is in a bypass state, the BMU of the battery module can still be kept in an active state, so that a control capability of the battery module can be ensured, and normal operation of the entire battery cluster is not affected even when the battery module is in the bypass state. Because energy required for driving the bypass switch S2 is very limited, the implementation of providing energy by an external voltage via the control bus is also very simple, causing no additional costs and providing high applicability.

In some feasible implementations, referring to FIG. 5b, FIG. 5b is another schematic diagram of a structure of a battery module according to this application. A switch bridge arm in a BMU of the battery module may be a low-voltage metal-oxide-semiconductor field-effect transistor (metal-oxide semiconductor field-effect transistor, MOSFET). A voltage of the low-voltage MOSFET may be 60 V, 80 V, 100 V, 120 V, 150 V, 200 V, or the like, which may be specifically determined based on an actual application scenario and is not limited herein. The low-voltage MOSFET has a low on-resistance, which can reduce conduction loss in an on state. In addition, the low-voltage MOSFET can operate in a synchronous rectification state, which can implement a low on-resistance in both a charge process and a discharge process, providing high applicability.

### Working principle of an energy storage system:

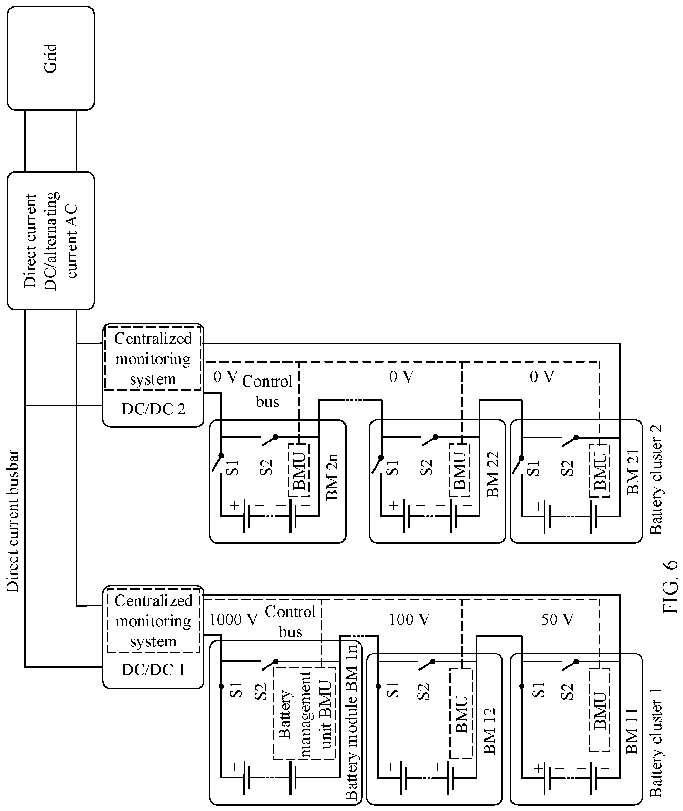

For ease of description, the following provides an example description of a working principle of an energy storage system provided in this application with reference to FIG. 6 to FIG. 10.

FIG. 6 is another schematic diagram of a structure of an energy storage system according to this application. In the energy storage system provided in this application, in any battery module (such as a battery module 11) of any battery cluster (such as a battery cluster 1), when a master control switch S1 is on and a bypass switch S2 is off, the battery module 11 is connected to the battery cluster 1 to implement high-power charge/discharge control. When the master control switch S1 is off and the bypass switch S2 is on, the battery module 11 is cut out of the battery cluster 1, and the battery module 11 does not participate in high-power charge/discharge control. When the master control switch S1 and the bypass switch S2 are both off, a port of the battery module is in a high-impedance state, that is, the battery module 11 is an open circuit. As shown in FIG. 6, taking the battery cluster 1 in FIG. 6 as an example, when the master control switch S1 in the battery module is on and the bypass switch S2 is off, a port voltage of the battery module is an output voltage of a battery string. Because a port of the battery module carries charge, when a quantity of battery modules connected in series in the battery cluster (for example, the battery cluster 1) increases, a voltage of the port of the battery cluster relative to the safety ground also increases. For example, assuming that a port voltage of an individual battery module is 50 V, when two battery modules are connected in series in the battery cluster 1, the port voltage of the battery cluster is 100 V, and when 20 battery modules (that is, n is 20) are connected in series in the battery cluster 1, the port voltage of the battery cluster 1 may be up to 1000 V. If there is poor electrical contact in the energy storage system, when an operator performs an electrical connection operation, the port voltage of up to 1000 V of the battery cluster may threaten personal safety of the operator. In the energy storage system provided in this application, a master control switch S1 and a bypass switch S2 of each battery module in the battery cluster may be in an off state by default. To be specific, when the energy storage system is in assembly or maintenance, a switch bridge arm of each battery module in the energy storage system is in an off state (that is, the master control switch S1 and the bypass switch S2 are both in the off state). In this way, a port of each battery module can be in a high-impedance state, and a danger from the port voltage of the battery cluster to the personal safety of the operator can be significantly reduced, ensuring the personal safety of the operator. As shown by a battery cluster 2 in FIG. 6, a master control switch S1 and a bypass switch S2 of each battery module in the battery cluster 2 are both in an off state. In this case, a port voltage of each battery module is 0 V, and a port voltage of the battery cluster 2 is 0 V. When the operator assembles or maintains the voltage cluster 2, the port voltage of the battery cluster 2 is 0 V, which does not threaten the personal safety of the operator and provides high applicability.

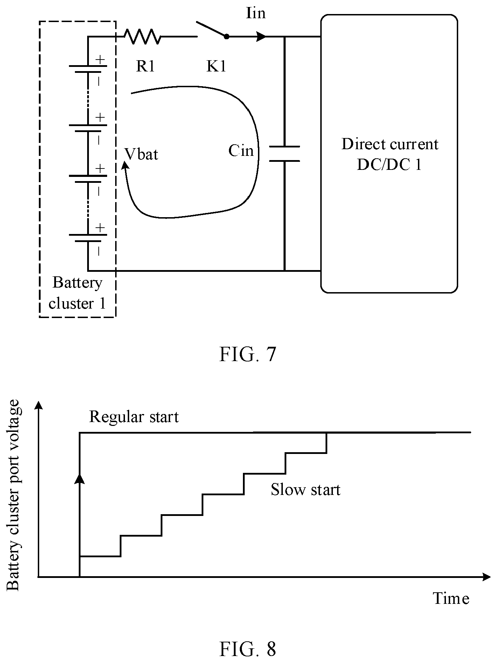

In some feasible implementations, regardless of whether a battery cluster is coupled to a busbar via a DC/DC converter or a DC/AC converter (in this application, for example, the battery cluster is coupled to a direct current busbar via a DC/DC converter), a capacitor is required on a battery cluster side for filtering, to smoothen high-frequency current ripples on a battery, as shown in FIG. 7. FIG. 7 is an equivalent schematic diagram of a connection between a battery cluster and a DC/DC converter in an energy storage system according to this application. Taking the battery cluster 1 as an example, Vbat may be a port voltage of the battery cluster 1, Cin is a filtering capacitance, R1 is a circuit impedance, K1 is a switch between the battery cluster and the DC/DC converter, and lin is a line current. In this case, if the switch K1 is closed directly, a severe current surge to the DC/DC converter may be caused. For example, if the port voltage of the battery cluster 1 is 1000 V and the line impedance is 50 mΩ, when K1 is closed, lin is 20 kA, and the current may directly damage a circuit component. Therefore, a stage of soft start circuit is usually added on the battery side of the DC/DC converter to reduce a current surge. The energy storage system provided in this application can alleviate the current surge problem by actively controlling the switch bridge arm of each battery module in the battery cluster to be on or off. As shown in FIG. 8, FIG. 8 is a schematic diagram of changes in a port voltage of a battery cluster in an energy storage system according to this application. In the energy storage system provided in this application, assuming that the port voltage of the battery cluster 1 is 1000 V and the line impedance is 50 mΩ, when master control switches and bypass switches of the battery modules in the battery cluster are in an off state, if the master control switches of the battery modules in the battery cluster are all closed, the port voltage of the battery cluster can quickly reach 1000 V, which may cause a severe current surge. In the energy storage system provided in this application, when the master control switches and the bypass switches of the battery modules in the battery cluster (such as the battery cluster 1) are in the off state, a centralized monitoring system of the battery cluster may control, by using BMUs of the energy storage modules, the master control switches S1 of the energy storage modules to be on one by one, so that the port voltage of the battery cluster increases stepwise until the port voltage of the battery cluster 1 reaches 1000 V when the master control switches of all the battery modules in the battery cluster are on. In this case, a voltage step value (that is, a value by which the port voltage of the battery cluster increases stepwise, which may be a port voltage value of an individual battery module, for example, 50 V) of the battery cluster is very small compared with the port voltage value (for example, 1000 V) of the battery cluster, and the current surge is significantly reduced. The manner of starting the energy storage system provided in this application can significantly simplify the soft start circuit of the DC/DC converter, and even no soft start circuit is required, providing simple operation and high applicability.

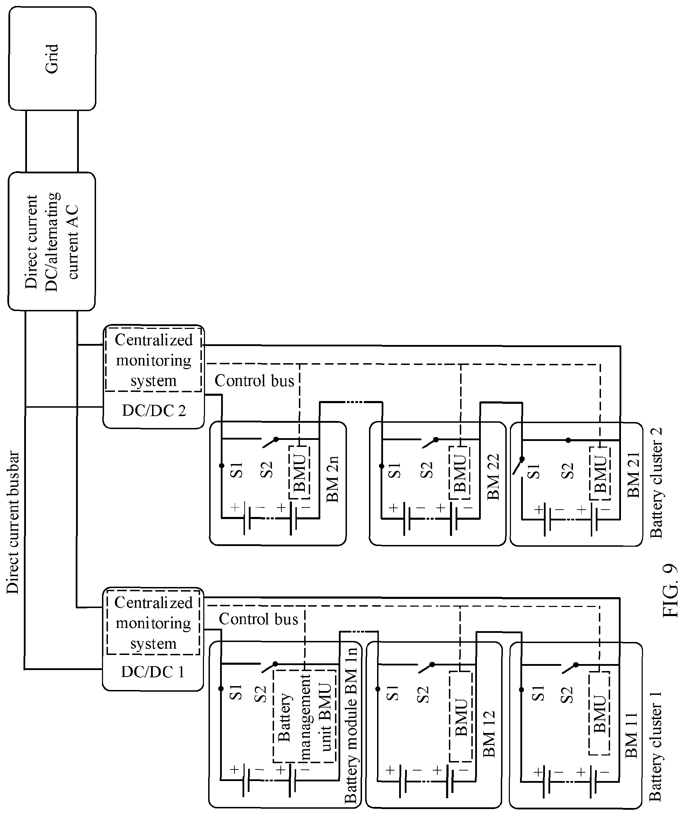

In some feasible implementations, the energy storage system provided in this application can implement balanced management of the battery modules, simplify on-site wiring of the energy storage system, reduce on-site delivery difficulty of the energy storage system, and enhance stability of the energy storage system, providing high applicability. FIG. 9 is another schematic diagram of a structure of an energy storage system according to this application. In any battery module of any battery cluster, when a master control switch S1 is on and a bypass switch S2 is off, the battery module is connected to the battery cluster to implement high-power charge/discharge control. When the master control switch S1 is off and the bypass switch S2 is on, the battery module is cut out of the battery cluster, that is, the battery module does not participate in high-power charge/discharge control.

In some feasible implementations, in a charging process of a battery cluster, when a BMU (which may be specifically an mBMS in the BMU, and details are not described herein again) in any battery module of any battery cluster detects that a port voltage for charging of the battery module is equal to a protection voltage threshold for battery charging (that is, an upper limit of the protection voltage threshold for charging), the BMU of the battery module may turn off the master control switch S1 of the battery module and turn on the bypass switch S2, so that the battery module operates in a bypass mode. In this case, a DC/DC converter connected to the battery cluster no longer charges the battery module. As shown by a battery cluster 2 in FIG. 9, when an upper limit of a protection threshold of a port voltage for charging of a BM 21 reaches an upper limit of a protection voltage threshold for charging, a BMU of the BM 21 may turn off a master control switch S1 in the BM 21 and turn on a bypass switch D2, to control the BM 21 to operate in a bypass mode. Similarly, in a discharging process of a battery cluster, when a BMU of any battery module of any battery cluster detects that a port voltage for discharging of the battery module is equal to a protection voltage threshold for battery discharging (that is, a lower limit of the protection voltage threshold for discharging), the BMU of the battery module may turn off the master control switch S1 of the battery module and turn on the bypass switch S2, so that the battery module also operates in a bypass mode. In this case, a DC/DC converter connected to the battery cluster no longer discharges the battery module. Optionally, upon detecting that a parameter of a battery string in the battery module exceeds a threshold, the BMU of any battery module of any battery cluster turns off a master control switch of the battery module and turns on a bypass switch of the battery module. Herein, the parameter of the battery string includes a charge/discharge time, a state of charge, a depth of discharge (depth of discharge, DOD), a state of health, a port voltage, and the like, which may be specifically determined based on an actual application scenario and is not limited herein. Herein, the parameter of the battery string exceeding the threshold may include: the charge/discharge time of the battery string is greater than a time threshold, the SOH of the battery string is less than an SOH threshold, the port voltage of the battery string is equal to a protection voltage threshold, or the like. A manner in which the parameter of the battery string exceeds the threshold may be determined based on a parameter type and is not limited herein. In this application, the DC/DC converter connected to the battery cluster may operate within a wide range of input/output voltages. Therefore, cutting in or out an individual battery module in the battery cluster does not affect normal operation of the battery cluster, which can implement control of the individual battery module and does not affect the normal operation of the battery cluster, providing high applicability. An action of the switch bridge arm may implement flexible cutting in or out of the battery module in the battery cluster, and a condition for cutting in or out may be determined based on the parameter such as a charge/discharge time, a state of charge, a depth of discharge, a state of health, and a port voltage of the battery module, which may be specifically determined based on an actual application scenario and is not limited herein.

In some feasible implementations, the BMU of any battery module in the energy storage system may further turn off the master control switch of the battery module and turn on the bypass switch when detecting an anomaly in a battery string of the battery module, so as to automatically cut out a faulty energy storage module while ensuring normal operation of the battery cluster and even the energy storage system. Herein, the anomaly of the battery string may include: an SOH of the battery string is less than an SOH threshold, a short circuit occurs in the battery string, over-temperature occurs in the battery string, or the like, which may be specifically determined based on an actual application scenario and is not limited herein. Under normal circumstances, for the battery cluster 1 in the energy storage system shown in FIG. 9, master control switches S1 in all battery modules are in an on state, and charge/discharge management of all the battery modules can be implemented by using the converter DC/DC 1. When a BMU in any battery module (that is, a battery module) detects that an SOH of a battery string of the battery module is less than a threshold (which may be a preset SOH threshold), or an anomalous working condition such as a short circuit or over-temperature occurs in the battery string of the battery module, the BMU of the battery module automatically turns off the master control switch S1 and turns on the bypass switch S2, that is, automatically controls the battery module to operate in a bypass mode. In other words, the battery module is cut out of the battery cluster (the battery module is in a short-circuit state). Optionally, the BMU of the battery module may issue an alarm signal at the same time. When a specific quantity of battery modules in the battery cluster have been cut out, or when spare battery modules have arrived, the energy storage system may be maintained manually, which can greatly reduce a maintenance period of the energy storage system while ensuring uninterrupted operation of the energy storage system, provide high applicability, and enhance value and market competitiveness of the energy storage system.

In some feasible implementations, the BMUs of the battery modules in the energy storage system are in uninterrupted communication with the centralized monitoring system of the battery cluster. When the BMU of any battery module detects a failure to receive a control signal of the centralized control system (that is, the BMU detects no control signal of the centralized monitoring system), the BMU of the battery module can control the switch bridge arm in the battery module to be in an off state, that is, the BMU of the battery module may turn off the master control switch and the bypass switch of the battery module, so that an output of the battery module is in a high-impedance state, thereby preventing the battery module from affecting normal operation of the battery cluster, improving stability of the energy storage system, and providing high applicability.

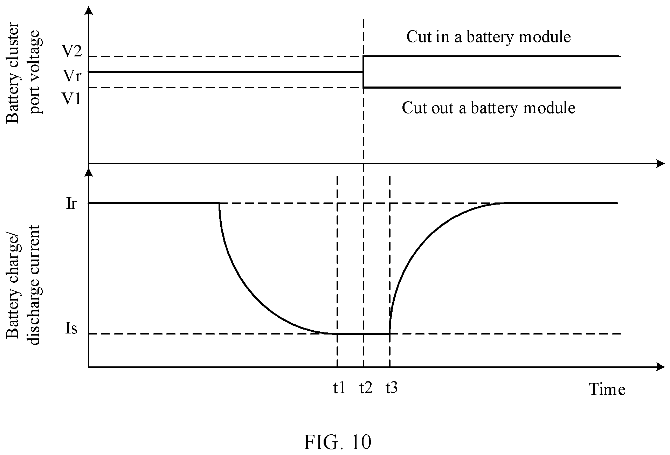

Referring to FIG. 10, FIG. 10 is a schematic diagram of changes in battery parameters during switching between battery modules in a battery cluster. Herein, the changes in the battery parameters during switching between the battery modules in the battery cluster may include: changes in a battery cluster port voltage and changes in a battery cluster charge/discharge current.

In some feasible implementations, when the battery modules in the battery cluster operate at a rated operating current of the battery cluster, if a switch bridge arm of a battery module is directly switched to cut in or out the battery module, a parasitic inductance of the battery module and a high change rate of a current (that is, di/dt) may cause a severe voltage stress and damages a power component. When the battery cluster port voltage is Vr, if a BMU of a battery module (for example, the battery module 11) directly switches a switch bridge arm of the battery module to cut in the battery module (a master control switch S1 is turned on, and a bypass switch S2 is turned off), as shown in FIG. 10, the battery cluster port voltage may increase to V2, where a voltage difference between V2 and Vr may be a port voltage (for example, 50 V) of the battery module. When the battery cluster port voltage is Vr, if the BMU of the battery module 11 directly switches the switch bridge arm of the battery module to cut out the battery module (the master control switch S1 is turned off, and the bypass switch S2 is turned on), as shown in FIG. 10, the battery cluster port voltage may drop to V1, where a voltage difference between Vr and V1 may be a port voltage (for example, 50 V) of the battery module. The BMU of any battery module in the energy storage system provided in this application may send a current adjustment request to the centralized monitoring system of the battery cluster when an mBMS detects that the port voltage of the battery module approaches a critical value (for example, a preset voltage threshold). Upon receiving the current adjustment request, the centralized monitoring system may control the DC/DC converter of the battery cluster to reduce a battery charge/discharge current of the battery cluster. At a moment t1, when the BMU of the battery module detects that the battery cluster charge/discharge current (which is also a charge/discharge current of the battery module) drops from a rated operating current Ir to a current threshold (for example, a preset current threshold) Is, the switch bridge arm of the battery module may be controlled to perform switching (turning off the master control switch and turning on the bypass switch (cutting out the battery module), or turning on the master control switch and turning off the bypass switch (cutting in the battery module)), so as to implement smooth cutting in or out of the battery module (assuming that the battery module is cut in or out at a moment t2) while protecting highly reliable operation of a switching component. Herein, the preset current threshold Is may be 50%, 20%, 10%, or the like of the rated operating current Ir of the battery cluster, which may be specifically determined based on an actual application scenario and is not limited herein. At a moment t3, after the battery module is smoothly cut in or out, the centralized monitoring system may control the DC/DC of the battery cluster to increase the battery charge/discharge current of the battery cluster. The battery charge/discharge current of the battery cluster starts to increase at the moment t3 until the rated operating current Ir of the battery cluster is reached.

The energy storage system provided in this application may implement rapid cutting in or out of a battery module by using the switch bridge arm of each battery module, which can implement flexible control of each battery cluster in the energy storage system, and enhance maintenance convenience and safety of the energy storage system. Based on communication between the BMU in the battery module of each battery cluster and the centralized monitoring system of each battery cluster, and a flexible control capability of the DC/DC converter connected to each battery cluster, energy management flexibility of each battery cluster can be improved, stability of the energy storage system can be improved, and higher applicability is provided.

## Claims

1. An energy storage system,
wherein the energy storage system comprises at least two energy storage unit clusters and a centralized monitoring system of the energy storage unit clusters, each of the energy storage unit clusters corresponds to one centralized monitoring system,
wherein the energy storage unit cluster comprises at least two energy storage modules (11, 12, ... 1n) connected in series, one of which comprises one energy storage element group comprising a plurality of battery units connected to form a battery string and one switch bridge arm,
wherein the switch bridge arm comprises a master control switch (S1) and a bypass switch (S2), wherein one terminal of the master control switch is connected to the energy storage element group, and the other terminal of the master control switch is used as a first input/output terminal of the energy storage module; one terminal of the bypass switch is connected to the first input/output terminal, and the other terminal of the bypass switch is connected to a second input/output terminal of the energy storage module;
wherein the energy storage unit cluster is coupled to a direct current busbar through a direct current DC/DC converter; and
wherein the centralized monitoring system is connected to the energy storage unit cluster through a control bus and is configured to control a master control switch (S1) and a bypass switch (S2) of any energy storage module (11, 12, ... 1n) in the energy storage unit cluster to be on or off to access or bypass the any energy storage module;
one of the at least two energy storage modules (11, 12, ... 1n) further comprises one battery management unit BMU; and
the BMU of the any energy storage module (11, 12, ... 1n) is configured to send a current adjustment request to the centralized monitoring system, when the port voltage of the energy storage module approaches a preset voltage threshold;
the centralized monitoring system is configured to: upon receiving the current adjustment request, control the DC/DC converter to reduce a battery charge/discharge current of the energy storage unit cluster;
the BMU of the any energy storage module is further configured to: upon detecting that the battery charge/discharge current is equal to a preset current threshold, turn off or on the master control switch (S1) or the bypass switch (S2) of the any energy storage module.

2. The energy storage system according to claim 1, wherein the centralized monitoring system is integrated into the DC/DC converter.

3. The energy storage system according to claim 1, wherein the centralized monitoring system is configured to control, by using a BMU of any energy storage module (11, 12, ... 1n), the master control switch (S1) and the bypass switch (S2) of the any energy storage module to be on or off.

4. The energy storage system according to claim 1, wherein the centralized monitoring system is configured to send a switch control signal through the control bus to control the master control switch (S1) and the bypass switch (S2) of the any energy storage module (11, 12, ... 1n) to be on or off.

5. The energy storage system according to any one of claims 1 to 4, wherein the master control switch (S1) and the bypass switch (S2) of the any energy storage module are integrated into the BMU of the any energy storage module (11, 12, ... 1n).

6. The energy storage system according to claim 5, wherein the BMU of the any energy storage module (11, 12, ... 1n) comprises a board.

7. The energy storage system according to claim 5, wherein the BMU of the any energy storage module (11, 12, ... 1n) comprises a plurality of boards, the plurality of boards comprise a modular battery management system mBMS board and a switch bridge arm board, and the master control switch (S1) and the bypass switch (S2) of the any energy storage module (11, 12, ... 1n) are integrated onto the switch bridge arm board.

8. The energy storage system according to claim 5, wherein the master control switch (S1) and the bypass switch (S2) of the any energy storage module (11, 12, ... 1n) in the energy storage unit cluster are in an off state.

9. The energy storage system according to claim 8, wherein a power supply module of the BMU of the any energy storage module (11, 12, ... 1n) supplies power via an energy storage element group of the any energy storage module or the control bus.

10. The energy storage system according to claim 9, wherein the centralized monitoring system is configured to: when the energy storage system is started, control, by using the BMUs of the energy storage modules in the energy storage unit cluster, master control switches (S1) of the energy storage modules to be on one by one.

11. The energy storage system according to claim 9 or 10, wherein the BMU of the any energy storage module is configured to: upon detecting that a port voltage for charging or discharging of the energy storage element group in the any energy storage module is equal to a protection voltage threshold, turn off the master control switch (S1) of the any energy storage module (11, 12, ... 1n) and turn on the bypass switch (S2) of the any energy storage module (11, 12, ... 1n).

12. The energy storage system according to claim 9 or 10, wherein the BMU of the any energy storage module (11, 12, ... 1n) is configured to: upon detecting that a parameter of the energy storage element group in the any energy storage module exceeds a threshold, turn off the master control switch (S1) of the any energy storage module and turn on the bypass switch (S2) of the any energy storage module.

13. The energy storage system according to claim 12, wherein the parameter of the energy storage element group comprises one or more of a charge/discharge time, a state of charge SOC, a depth of discharge DOD, a state of health SOH, and a port voltage.

14. The energy storage system according to claim 9 or 10, wherein the BMU of the any energy storage module (11, 12, ... 1n) is configured to: upon detecting that the energy storage element group in the any energy storage module has an anomaly, turn off the master control switch (S1) of the any energy storage module and turn on the bypass switch (S2), wherein
the anomaly of the energy storage element group comprises: a state of health SOH of the energy storage element group is less than an SOH threshold, a short circuit occurs in the energy storage element group, or over-temperature occurs in the energy storage element group.

15. The energy storage system according to claim 1, wherein the preset current threshold is 50%, 20%, or 10% of a rated operating current of the energy storage unit cluster.

16. The energy storage system according to claim 10, wherein the BMU of the any energy storage module (11, 12, ... 1n) is further configured to: upon detecting no control signal of the centralized monitoring system, turn off the master control switch (S1) and the bypass switch (S2) of the any energy storage module.

17. The energy storage system according to any one of claims 1 to 16, wherein the switch bridge arm is a low-voltage metal-oxide-semiconductor field-effect transistor MOSFET, and a voltage of the low-voltage MOSFET comprises 60 V, 80 V, 100 V, 120 V, 150 V, or 200 V.

18. A control method for an energy storage system, wherein the method is applicable to the centralized monitoring system in the energy storage system according to any one of claims 1 to 17 and comprises:
the centralized monitoring system being connected to the energy storage unit cluster through a control bus; and
controlling, by the centralized monitoring system, a master control switch (S1) and a bypass switch (S2) of any energy storage module (11, 12, ... 1n) in the energy storage unit cluster to be on or off to access or bypass the any energy storage module.

19. The control method according to claim 18, wherein the centralized monitoring system being connected to the energy storage unit cluster through a control bus comprises:
the centralized monitoring system being connected to battery management units BMUs of the energy storage modules (11, 12, ... 1n) in the energy storage unit cluster through the control bus; and
the controlling, by the centralized monitoring system, a master control switch (S1) and a bypass switch (S2) of any energy storage module in the energy storage unit cluster to be on or off comprises:
controlling, by the centralized monitoring system by using a BMU of any energy storage module, the master control switch and the bypass switch of the any energy storage module to be on or off.

20. The control method according to claim 18, wherein the controlling, by the centralized monitoring system, a master control switch (S1) and a bypass switch (S2) of any energy storage module (11, 12, ... 1n) in the energy storage unit cluster to be on or off comprises:
sending, by the centralized monitoring system, a switch control signal through the control bus to control the master control switch (S1) and the bypass switch (S2) of the any energy storage module to be on or off.

21. The control method according to claim19, wherein the controlling, by the centralized monitoring system, a master control switch (S1) and a bypass switch (S2) of any energy storage module in the energy storage unit cluster to be on or off comprises:
when the energy storage system is started, controlling, by the centralized monitoring system by using the BMUs of the energy storage modules (11, 12, ... 1n) in the energy storage unit cluster, master control switches (S1) of the energy storage modules to be on one by one.

22. The control method according to claim 19 or 21, wherein the method further comprises:
when the centralized monitoring system detects, by using the BMU of the any energy storage module, that a port voltage for charging or discharging of the energy storage element group in the any energy storage module (11, 12, ... 1n) is equal to a protection voltage threshold, turning off, by the BMU of the any energy storage module, the master control switch (S1) of the any energy storage module and turning on the bypass switch (S2) of the any energy storage module.

23. The control method according to claim 19 or 21, wherein the method further comprises:
when the centralized monitoring system detects, by using the BMU of the any energy storage module (11, 12, ... 1n), that a parameter of the energy storage element group in the any energy storage module exceeds a threshold, turning off, by the BMU of the any energy storage module, the master control switch (S1) of the any energy storage module and turning on the bypass switch (S2) of the any energy storage module, wherein
the parameter of the energy storage element group comprises one or more of a charge/discharge time, a state of charge SOC, a depth of discharge DOD, a state of health SOH, and a port voltage.

24. The control method according to claim 19 or 21, wherein the method further comprises:
when the centralized monitoring system detects, by using the BMU of the any energy storage module (11, 12, ... 1n), that the energy storage element group in the any energy storage module has an anomaly, turning off, by the BMU of the any energy storage module, the master control switch (S1) of the any energy storage module and turning on the bypass switch (S2), wherein
the anomaly of the energy storage element group comprises: an SOH of the energy storage element group is less than an SOH threshold, a short circuit occurs in the energy storage element group, or over-temperature occurs in the energy storage element group.

25. The control method according to any one of claims 22 to 24, wherein the method further comprises:
when the centralized monitoring system receives a current adjustment request from the BMU of the any energy storage module (11, 12, ... 1n), controlling the DC/DC converter to reduce a battery charge/discharge current of the energy storage unit cluster; and
when the centralized monitoring system detects, by using the BMU of the any energy storage module, that the battery charge/discharge current is equal to a preset current threshold, turning on or off, by the BMU of the any energy storage module, the master control switch or the bypass switch of the any energy storage module, wherein
the preset current threshold is 50%, 20%, or 10% of a rated operating current of the energy storage unit cluster.

## Patentansprüche

1. Energiespeichersystem,
wobei das Energiespeichersystem mindestens zwei Energiespeichereinheitcluster und ein zentralisiertes Überwachungssystem der Energiespeichereinheitcluster umfasst, wobei jeder der Energiespeichereinheitcluster einem zentralisierten Überwachungssystem entspricht,
wobei der Energiespeichereinheitcluster mindestens zwei Energiespeichermodule (11, 12, ... 1n) in Reihe verbunden umfasst, von denen eines eine Energiespeicherelementgruppe umfasst, die eine Vielzahl von Batterieeinheiten, die verbunden sind, um einen Batteriestrang auszubilden, und einen Schalterbrückenarm umfasst,
wobei der Schalterbrückenarm einen Hauptsteuerschalter (S1) und einen Bypass-Schalter (S2) umfasst, wobei ein Anschluss des Hauptsteuerschalters mit der Energiespeicherelementgruppe verbunden ist und der andere Anschluss des Hauptsteuerschalters als ein erster Eingangs-/Ausgangsanschluss des Energiespeichermoduls verwendet wird; ein Anschluss des Bypass-Schalters mit dem ersten Eingangs-/Ausgangsanschluss verbunden ist, und der andere Anschluss des Bypass-Schalters mit einem zweiten Eingangs-/Ausgangsanschluss des Energiespeichermoduls verbunden ist;
wobei der Energiespeichereinheitcluster über einen Gleichstrom-DC/DC-Wandler an eine Gleichstromsammelschiene gekoppelt ist; und
wobei das zentralisierte Überwachungssystem mit dem Energiespeichereinheitcluster über einen Steuerbus verbunden ist und konfiguriert ist, um einen Hauptsteuerschalter (S1) und einen Bypass-Schalter (S2) eines beliebigen Energiespeichermoduls (11, 12, ... 1n) in dem Energiespeichereinheitcluster zu steuern, um ein- oder ausgeschaltet zu sein, um auf das beliebige Energiespeichermodul zuzugreifen oder es zu überbrücken;
eines der mindestens zwei Energiespeichermodule (11, 12, ... 1n) ferner eine Batterieverwaltungseinheit BMU umfasst; und
die BMU des beliebigen Energiespeichermoduls (11, 12, ... 1n) konfiguriert ist, um eine Stromanpassungsanforderung an das zentralisierte Überwachungssystem zu senden, wenn die Portspannung des Energiespeichermoduls sich einem voreingestellten Spannungsschwellenwert nähert;
das zentralisierte Überwachungssystem konfiguriert ist zum: bei einem Empfangen der Stromanpassungsanforderung, Steuern des DC/DC-Wandlers, um einen Batterielade-/entladestrom des Energiespeichereinheitclusters zu reduzieren;
die BMU des beliebigen Energiespeichermoduls ferner konfiguriert ist zum: bei einem Erfassen, dass der Batterielade-/entladestrom gleich einem voreingestellten Stromschwellenwert ist, Ein- oder Ausschalten des Hauptsteuerschalters (S1) oder des Bypass-Schalters (S2) des beliebigen Energiespeichermoduls.

2. Energiespeichersystem nach Anspruch 1, wobei das zentralisierte Überwachungssystem in den DC/DC-Wandler integriert ist.

3. Energiespeichersystem nach Anspruch 1, wobei das zentralisierte Überwachungssystem konfiguriert ist, um durch Verwenden einer BMU eines beliebigen Energiespeichermoduls (11, 12, ... 1n), den Hauptsteuerschalter (S1) und den Bypass-Schalter (S2) des beliebigen Energiespeichermoduls zu steuern, um ein- oder ausgeschaltet zu sein.

4. Energiespeichersystem nach Anspruch 1, wobei das zentralisierte Überwachungssystem konfiguriert ist, um ein Schaltersteuersignal über den Steuerbus zu senden, um den Hauptsteuerschalter (S1) und den Bypass-Schalter (S2) des beliebigen Energiespeichermoduls (11, 12, ... 1n) zu steuern, um ein- oder ausgeschaltet zu sein.

5. Energiespeichersystem nach einem der Ansprüche 1 bis 4, wobei der Hauptsteuerschalter (S1) und der Bypass-Schalter (S2) des beliebigen Energiespeichermoduls in die BMU des beliebigen Energiespeichermoduls (11, 12, ... 1n) integriert sind.

6. Energiespeichersystem nach Anspruch 5, wobei die BMU des beliebigen Energiespeichermoduls (11, 12, ... 1n) eine Platine umfasst.

7. Energiespeichersystem nach Anspruch 5, wobei die BMU des beliebigen Energiespeichermoduls (11, 12, ... 1n) eine Vielzahl von Platinen umfasst, die Vielzahl von Platinen eine modulare Batterieverwaltungssystem(mBMS)-Platine und eine Schalterbrückenarmplatine umfasst, und der Hauptsteuerschalter (S1) und der Bypass-Schalter (S2) des beliebigen Energiespeichermoduls (11, 12, ... 1n) auf der Schalterbrückenarmplatine integriert sind.

8. Energiespeichersystem nach Anspruch 5, wobei der Hauptsteuerschalter (S1) und der Bypass-Schalter (S2) des beliebigen Energiespeichermoduls (11, 12, ... 1n) in dem Energiespeichereinheitcluster in einem Aus-Zustand sind.

9. Energiespeichersystem nach Anspruch 8, wobei ein Leistungsversorgungsmodul der BMU des beliebigen Energiespeichermoduls (11, 12, ... 1n) Leistung über eine Energiespeicherelementgruppe des beliebigen Energiespeichermoduls oder den Steuerbus zuführt.

10. Energiespeichersystem nach Anspruch 9, wobei das zentralisierte Überwachungssystem konfiguriert ist zum: wenn das Energiespeichersystem gestartet wird, Steuern, durch Verwenden der BMUs der Energiespeichermodule in dem Energiespeichereinheitcluster, von Hauptsteuerschaltern (S1) der Energiespeichermodule, um nacheinander eingeschaltet zu werden.

11. Energiespeichersystem nach Anspruch 9 oder 10, wobei die BMU des beliebigen Energiespeichermoduls konfiguriert ist zum: bei dem Erfassen, dass eine Portspannung zum Laden oder Entladen der Energiespeicherelementgruppe in dem beliebigen Energiespeichermodul gleich einem Schutzspannungsschwellenwert ist, Ausschalten des Hauptsteuerschalters (S1) des beliebigen Energiespeichermoduls (11, 12, ... 1n) und des Bypass-Schalters (S2) des beliebigen Energiespeichermoduls (11, 12, 1n).

12. Energiespeichersystem nach Anspruch 9 oder 10, wobei die BMU des beliebigen Energiespeichermoduls (11, 12, ... 1n) konfiguriert ist zum: bei dem Erfassen, dass ein Parameter der Energiespeicherelementgruppe in dem beliebigen Energiespeichermodul einen Schwellenwert überschreitet, Ausschalten des Hauptsteuerschalters (S1) des beliebigen Energiespeichermoduls und Einschalten des Bypass-Schalters (S2) des beliebigen Energiespeichermoduls.

13. Energiespeichersystem nach Anspruch 12, wobei der Parameter der Energiespeicherelementgruppe eines oder mehrere von einer Lade-/Entladezeit, einem Ladezustand SOC, einer Entladetiefe DOD, einem Gesundheitszustand SOH und einer Portspannung umfasst.

14. Energiespeichersystem nach Anspruch 9 oder 10, wobei die BMU des beliebigen Energiespeichermoduls (11, 12, ... 1n) konfiguriert ist zum: bei dem Erfassen, dass die Energiespeicherelementgruppe in dem beliebigen Energiespeichermodul eine Anomalie aufweist, Ausschalten des Hauptsteuerschalters (S1) des beliebigen Energiespeichermoduls und Einschalten des Bypass-Schalters (S2), wobei die Anomalie der Energiespeicherelementgruppe umfasst: einen Gesundheitszustand SOH der Energiespeicherelementgruppe, der geringer als ein SOH-Schwellenwert ist, einen Kurzschluss, der in der Energiespeicherelementgruppe auftritt, oder eine Übertemperatur, die in der Energiespeicherelementgruppe auftritt.

15. Energiespeichersystem nach Anspruch 1, wobei der voreingestellte Stromschwellenwert 50 %, 20 % oder 10 % eines Nennbetriebsstroms des Energiespeichereinheitclusters beträgt.

16. Energiespeichersystem nach Anspruch 10, wobei die BMU des beliebigen Energiespeichermoduls (11, 12, ... 1n) ferner konfiguriert ist zum: bei dem Erfassen, dass kein Steuersignal des zentralisierten Überwachungssystems vorhanden ist, Ausschalten des Hauptsteuerschalters (S1) und des Bypass-Schalters (S2) des beliebigen Energiespeichermoduls.

17. Energiespeichersystem nach einem der Ansprüche 1 bis 16, wobei der Schalterbrückenarm ein Niederspannungs-Metall-Oxid-Halbleiter-Feldeffekttransistor MOSFET ist, und eine Spannung des Niederspannungs-MOSFET 60 V, 80 V, 100 V, 120 V, 150 V oder 200 V umfasst.

18. Steuerverfahren für ein Energiespeichersystem, wobei das Verfahren auf das zentralisierte Überwachungssystem in dem Energiespeichersystem nach einem der Ansprüche 1 bis 17 anwendbar ist und umfasst:
das zentralisierte Überwachungssystem, das mit dem Energiespeichereinheitcluster über einen Steuerbus verbunden ist; und
Steuern, durch das zentralisierte Überwachungssystem, eines Hauptsteuerschalters (S1) und eines Bypass-Schalters (S2) eines beliebigen Energiespeichermoduls (11, 12, ... 1n) in dem Energiespeichereinheitcluster, um ein- oder ausgeschaltet zu sein, um auf das beliebige Energiespeichermodul zuzugreifen oder es zu überbrücken.

19. Steuerverfahren nach Anspruch 18, wobei das zentralisierte Überwachungssystem, das mit dem Energiespeichereinheitcluster über einen Steuerbus verbunden ist, umfasst:
das zentralisierte Überwachungssystem, das mit Batterieverwaltungseinheiten BMUs der Energiespeichermodule (11, 12, ... 1n) in dem Energiespeichereinheitcluster über den Steuerbus verbunden ist; und
das Steuern, durch das zentralisierte Überwachungssystem, eines Hauptsteuerschalters (S1) und eines Bypass-Schalters (S2) eines beliebigen Energiespeichermoduls in dem Energiespeichereinheitcluster, um ein- oder
ausgeschaltet zu sein, umfasst:
Steuern, durch das zentralisierte Überwachungssystem durch Verwenden einer BMU eines beliebigen Energiespeichermoduls, des Hauptsteuerschalters und des Bypass-Schalters des beliebigen Energiespeichermoduls, um ein- oder ausgeschaltet zu sein.

20. Steuerverfahren nach Anspruch 18, wobei das Steuern, durch das zentralisierte Überwachungssystem, eines Hauptsteuerschalters (S1) und eines Bypass-Schalters (S2) eines beliebigen Energiespeichermoduls (11, 12, ... 1n) in dem Energiespeichereinheitcluster, um ein- oder ausgeschaltet zu sein, umfasst:
Senden, durch das zentralisierte Überwachungssystem, eines Schaltsteuersignals, über den Steuerbus, um den Hauptsteuerschalter (S1) und den Bypass-Schalters (S2) des beliebigen Energiespeichermoduls zu steuern, um ein- oder ausgeschaltet zu sein.

21. Steuerverfahren nach Anspruch 19, wobei das Steuern, durch das zentralisierte Überwachungssystem, eines Hauptsteuerschalters (S1) und eines Bypass-Schalters (S2) eines beliebigen Energiespeichermoduls in dem Energiespeichereinheitcluster, um ein- oder ausgeschaltet zu sein, umfasst:
wenn das Energiespeichersystem gestartet wird, Steuern, durch das zentralisierte Überwachungssystem durch Verwenden der BMUs der Energiespeichermodule (11, 12, ... 1n) in dem Energiespeichereinheitcluster, von Hauptsteuerschaltern (S1) der Energiespeichermodule, um nacheinander eingeschaltet zu werden.

22. Verfahren nach Anspruch 19 oder 21, wobei das Verfahren ferner umfasst:
wenn das zentralisierte Überwachungssystem, durch Verwenden der BMU des beliebigen Energiespeichermoduls, erfasst, dass eine Portspannung zum Laden oder Entladen der Energiespeicherelementgruppe in dem beliebigen Energiespeichermodul (11, 12, ... 1n) gleich einem Schutzspannungsschwellenwert ist, Ausschalten, durch die BMU des beliebigen Energiespeichermoduls, des Hauptsteuerschalters (S1) des beliebigen Energiespeichermoduls und Einschalten des Bypass-Schalters (S2) des beliebigen Energiespeichermoduls.

23. Verfahren nach Anspruch 19 oder 21, wobei das Verfahren ferner umfasst:
wenn das zentralisierte Überwachungssystem, durch Verwenden der BMU des beliebigen Energiespeichermoduls (11, 12, ... 1n), erfasst, dass ein Parameter der Energiespeicherelementgruppe in dem beliebigen Energiespeichermodul einen Schwellenwert überschreitet, Ausschalten, durch die BMU des beliebigen Energiespeichermoduls, des Hauptsteuerschalters (S1) des beliebigen Energiespeichermoduls und Einschalten des Bypass-Schalters (S2) des beliebigen Energiespeichermoduls, wobei
der Parameter der Energiespeicherelementgruppe eines oder mehrere von einer Lade-/Entladezeit, einem Ladezustand SOC, einer Entladetiefe DOD, einem Gesundheitszustand SOH und einer Portspannung umfasst.

24. Verfahren nach Anspruch 19 oder 21, wobei das Verfahren ferner umfasst:
wenn das zentralisierte Überwachungssystem, durch Verwenden der BMU des beliebigen Energiespeichermoduls (11, 12, ... 1n), erfasst, dass die Energiespeicherelementgruppe in dem beliebigen Energiespeichermodul eine Anomalie aufweist, Ausschalten, durch die BMU des beliebigen Energiespeichermoduls, des Hauptsteuerschalters (S1) des beliebigen Energiespeichermoduls und Einschalten des Bypass-Schalters (S2), wobei die Anomalie der Energiespeicherelementgruppe umfasst: einen SOH der Energiespeicherelementgruppe, der geringer als ein SOH-Schwellenwert ist, einen Kurzschluss, der in der Energiespeicherelementgruppe auftritt, oder eine Übertemperatur, die in der Energiespeicherelementgruppe auftritt.

25. Steuerverfahren nach einem der Ansprüche 22 bis 24, wobei das Verfahren ferner umfasst:
wenn das zentralisierte Überwachungssystem eine Stromanpassungsanforderung von der BMU des beliebigen Energiespeichermoduls (11, 12, ... 1n) empfängt, Steuern des DC/DC-Wandlers, um einen Batterielade-/entladestroms des Energiespeichereinheitclusters zu reduzieren; und
wenn das zentralisierte Überwachungssystem, durch Verwenden der BMU des beliebigen Energiespeichermoduls, erfasst, dass der Batterielade-/-entladestrom gleich einem voreingestellten Stromschwellenwert ist, Ein- oder Ausschalten, durch die BMU des beliebigen Energiespeichermoduls, des Hauptsteuerschalters oder des Bypass-Schalters des beliebigen Energiespeichermoduls, wobei
der voreingestellte Stromschwellenwert 50 %, 20 % oder 10 % eines Nennbetriebsstroms des Energiespeichereinheitclusters beträgt.

## Revendications

1. Système de stockage d'énergie,
dans lequel le système de stockage d'énergie comprend au moins deux groupements d'unités de stockage d'énergie et un système de surveillance centralisé des groupements d'unités de stockage d'énergie, chacun des groupements d'unités de stockage d'énergie correspondant à un système de surveillance centralisé,
dans lequel le groupement d'unités de stockage d'énergie comprend au moins deux modules de stockage d'énergie (11, 12, ... 1n) connectés en série, dont l'un comprend un groupe d'éléments de stockage d'énergie comprenant une pluralité d'unités de batterie connectées pour former une chaîne de batteries et un bras de pont de commutation, dans lequel le bras de pont de commutation comprend un commutateur de commande principal (S1) et un commutateur de dérivation (S2), dans lequel une borne du commutateur de commande principal est connectée au groupe d'éléments de stockage d'énergie, et l'autre borne du commutateur de commande principal est utilisée comme première borne d'entrée/sortie du module de stockage d'énergie ; une borne du commutateur de dérivation est connectée à la première borne d'entrée/sortie, et l'autre borne du commutateur de dérivation est connectée à une seconde borne d'entrée/sortie du module de stockage d'énergie ;
dans lequel le groupement d'unités de stockage d'énergie est couplé à une barre omnibus de courant continu par l'intermédiaire d'un convertisseur CC/C à courant continu ; et dans lequel le système de surveillance centralisé est connecté au groupement d'unités de stockage d'énergie par l'intermédiaire d'un bus de commande et est configuré pour commander l'activation ou la désactivation d'un commutateur de commande principal (S1) et d'un commutateur de dérivation (S2) d'un module de stockage d'énergie (11, 12, ... 1n) quelconque dans le groupement d'unités de stockage d'énergie pour accéder au module de stockage d'énergie quelconque ou le contourner ;
l'un des au moins deux modules de stockage d'énergie (11, 12, ... 1n) comprend en outre une unité de gestion de batterie BMU ; et
la BMU du module de stockage d'énergie (11, 12, ... 1n) quelconque est configurée pour envoyer une demande d'ajustement de courant au système de surveillance centralisé, lorsque la tension de port du module de stockage d'énergie approche un seuil de tension prédéfini ;
le système de surveillance centralisé est configuré pour : lors de la réception de la demande d'ajustement de courant, commander le convertisseur CC/CC afin de réduire un courant de charge/décharge de batterie du groupement d'unités de stockage d'énergie ; la BMU du module de stockage d'énergie quelconque est en outre configurée pour : lors de la détection du fait que le courant de charge/décharge de batterie est égal à un seuil de courant prédéfini, désactiver ou activer le commutateur de commande principal (S1) ou le commutateur de dérivation (S2) du module de stockage d'énergie quelconque.

2. Système de stockage d'énergie selon la revendication 1, dans lequel le système de surveillance centralisé est intégré au convertisseur CC/CC.

3. Système de stockage d'énergie selon la revendication 1, dans lequel le système de surveillance centralisé est configuré pour commander, en utilisant une BMU d'un module de stockage d'énergie (11, 12, ... 1n) quelconque, l'activation ou la désactivation du commutateur de commande principal (S1) et du commutateur de dérivation (S2) du module de stockage d'énergie quelconque.

4. Système de stockage d'énergie selon la revendication 1, dans lequel le système de surveillance centralisé est configuré pour envoyer un signal de commande de commutation par l'intermédiaire du bus de commande afin de commander l'activation ou la désactivation du commutateur de commande principal (S1) et du commutateur de dérivation (S2) du module de stockage d'énergie (11, 12, ... 1n) quelconque.

5. Système de stockage d'énergie selon l'une quelconque des revendications 1 à 4, dans lequel le commutateur de commande principal (S1) et le commutateur de dérivation (S2) du module de stockage d'énergie quelconque sont intégrés dans la BMU du module de stockage d'énergie (11, 12, ... 1n) quelconque.

6. Système de stockage d'énergie selon la revendication 5, dans lequel la BMU du module de stockage d'énergie (11, 12, ... 1n) quelconque comprend une carte.

7. Système de stockage d'énergie selon la revendication 5, dans lequel la BMU du module de stockage d'énergie (11, 12, ... 1n) quelconque comprend une pluralité de cartes, la pluralité de cartes comprend une carte de système modulaire de gestion de batterie mBMS et une carte de bras de pont de commutation, et le commutateur de commande principal (S1) et le commutateur de dérivation (S2) du module de stockage d'énergie (11, 12, ... 1n) quelconque sont intégrés à la carte de bras de pont de commutation.

8. Système de stockage d'énergie selon la revendication 5, dans lequel le commutateur de commande principal (S1) et le commutateur de dérivation (S2) du module de stockage d'énergie (11, 12, ... 1n) quelconque dans le groupement d'unités de stockage d'énergie sont dans un état désactivé.

9. Système de stockage d'énergie selon la revendication 8, dans lequel un module d'alimentation électrique de la BMU du module de stockage d'énergie (11, 12, ... 1n) quelconque fournit de l'énergie par l'intermédiaire d'un groupe d'éléments de stockage d'énergie du module de stockage d'énergie quelconque ou du bus de commande.

10. Système de stockage d'énergie selon la revendication 9, dans lequel le système de surveillance centralisé est configuré pour : lorsque le système de stockage d'énergie est démarré, commander, en utilisant les BMU des modules de stockage d'énergie dans le groupement d'unités de stockage d'énergie, l'activation de commutateurs de commande principaux (S1) des modules de stockage d'énergie un par un.

11. Système de stockage d'énergie selon la revendication 9 ou 10, dans lequel la BMU du module de stockage d'énergie quelconque est configurée pour : lors de la détection du fait qu'une tension de port de charge ou de décharge du groupe d'éléments de stockage d'énergie dans le module de stockage d'énergie quelconque est égale à un seuil de tension de protection, désactiver le commutateur de commande principal (S1) du module de stockage d'énergie (11, 12, ... 1n) quelconque et activer le commutateur de dérivation (S2) du module de stockage d'énergie (11, 12, ... 1n) quelconque.

12. Système de stockage d'énergie selon la revendication 9 ou 10, dans lequel la BMU du module de stockage d'énergie (11, 12, ... 1n) quelconque est configurée pour : lors de la détection du fait qu'un paramètre du groupe d'éléments de stockage d'énergie dans le module de stockage d'énergie quelconque dépasse un seuil, désactiver le commutateur de commande principal (S1) du module de stockage d'énergie quelconque et activer le commutateur de dérivation (S2) du module de stockage d'énergie quelconque.

13. Système de stockage d'énergie selon la revendication 12, dans lequel le paramètre du groupe d'éléments de stockage d'énergie comprend l'un ou plusieurs parmi un temps de charge/décharge, un état de charge SOC, une profondeur de décharge DOD, un état de santé SOH, et une tension de port.

14. Système de stockage d'énergie selon la revendication 9 ou 10, dans lequel la BMU du module de stockage d'énergie (11, 12, ... 1n) quelconque est configurée pour : lors de la détection du fait que le groupe d'éléments de stockage d'énergie dans le module de stockage d'énergie quelconque a une anomalie, désactiver le commutateur de commande principal (S1) du module de stockage d'énergie quelconque et activer le commutateur de dérivation (S2), dans lequel
l'anomalie du groupe d'éléments de stockage d'énergie comprend : un état de santé SOH du groupe d'éléments de stockage d'énergie est inférieur à un seuil de SOH, un court-circuit se produit dans le groupe d'éléments de stockage d'énergie, ou une surchauffe se produit dans le groupe d'éléments de stockage d'énergie.

15. Système de stockage d'énergie selon la revendication 1, dans lequel le seuil de courant prédéfini est de 50 %, 20 %, ou 10 % d'un courant de fonctionnement nominal du groupement d'unités de stockage d'énergie.

16. Système de stockage d'énergie selon la revendication 10, dans lequel la BMU du module de stockage d'énergie (11, 12, ... 1n) quelconque est en outre configurée pour : lors de la détection de l'absence de signal de commande du système de surveillance centralisé, désactiver le commutateur de commande principal (S1) et le commutateur de dérivation (S2) du module de stockage d'énergie quelconque.

17. Système de stockage d'énergie selon l'une quelconque des revendications 1 à 16, dans lequel le bras de pont de commutation est un transistor à effet de champ métal-oxyde-semiconducteur MOSFET basse tension, et une tension du MOSFET basse tension est de 60 V, 80 V, 100 V, 120 V, 150 V, ou 200 V.

18. Procédé de commande pour un système de stockage d'énergie, dans lequel le procédé est applicable au système de surveillance centralisé dans le système de stockage d'énergie selon l'une quelconque des revendications 1 à 17 et comprend :
le fait que le système de surveillance centralisé est connecté au groupement d'unités de stockage d'énergie par l'intermédiaire d'un bus de commande ; et
la commande, par le système de surveillance centralisé, de l'activation ou de la désactivation d'un commutateur de commande principal (S1) et d'un commutateur de dérivation (S2) d'un module de stockage d'énergie (11, 12, ... 1n) quelconque dans le groupement d'unités de stockage d'énergie pour accéder au module de stockage d'énergie quelconque ou le contourner.

19. Procédé de commande selon la revendication 18, dans lequel le fait que le système de surveillance centralisé est connecté au groupement d'unités de stockage d'énergie par l'intermédiaire d'un bus de commande comprend :
le fait que le système de surveillance centralisé est connecté à des unités de gestion de batterie BMU des modules de stockage d'énergie (11, 12, ... 1n) dans le groupement d'unités de stockage d'énergie par l'intermédiaire du bus de commande ; et
la commande, par le système de surveillance centralisé, de l'activation ou de la désactivation d'un commutateur de commande principal (S1) et d'un commutateur de dérivation (S2) d'un module de stockage d'énergie quelconque dans le groupement d'unités de stockage d'énergie comprend :
la commande, par le système de surveillance centralisé en utilisant une BMU d'un module de stockage d'énergie quelconque, de l'activation ou de la désactivation du commutateur de commande principal et du commutateur de dérivation du module de stockage d'énergie quelconque.

20. Procédé de commande selon la revendication 18, dans lequel la commande, par le système de surveillance centralisé, de l'activation ou de la désactivation d'un commutateur de commande principal (S1) et d'un commutateur de dérivation (S2) d'un module de stockage d'énergie quelconque (11, 12, ... 1n) dans le groupement d'unités de stockage d'énergie comprend :
l'envoi, par le système de surveillance centralisé, d'un signal de commande de commutation par l'intermédiaire du bus de commande pour commander l'activation ou la désactivation du commutateur de commande principal (S1) et du commutateur de dérivation (S2) du module de stockage d'énergie quelconque.

21. Procédé de commande selon la revendication 19, dans lequel la commande, par le système de surveillance centralisé, de l'activation ou de la désactivation d'un commutateur de commande principal (S1) et d'un commutateur de dérivation (S2) d'un module de stockage d'énergie quelconque dans le groupement d'unités de stockage d'énergie comprend :
lorsque le système de stockage d'énergie est démarré, la commande, par le système de surveillance centralisé, en utilisant les BMU des modules de stockage d'énergie (11, 12, ... 1n) dans le groupement d'unités de stockage d'énergie, de l'activation ou de la désactivation de commutateurs de commande principaux (S1) des modules de stockage d'énergie un par un.

22. Procédé de commande selon la revendication 19 ou 21, dans lequel le procédé comprend en outre :
lorsque le système de surveillance centralisé détecte, en utilisant la BMU du module de stockage d'énergie quelconque, qu'une tension de port pour la charge ou la décharge du groupe d'éléments de stockage d'énergie dans le module de stockage d'énergie (11, 12, ... 1n) quelconque est égale à un seuil de tension de protection, la désactivation, par la BMU du module de stockage d'énergie quelconque, du commutateur de commande principal (S1) du module de stockage d'énergie quelconque et l'activation du commutateur de dérivation (S2) du module de stockage d'énergie quelconque.

23. Procédé de commande selon la revendication 19 ou 21, dans lequel le procédé comprend en outre :
lorsque le système de surveillance centralisé détecte, en utilisant la BMU du module de stockage d'énergie (11, 12, ... 1n) quelconque, qu'un paramètre du groupe d'éléments de stockage d'énergie dans le module de stockage d'énergie quelconque dépasse un seuil, la désactivation, par la BMU du module de stockage d'énergie quelconque, du commutateur de commande principal (S1) du module de stockage d'énergie quelconque et l'activation du commutateur de dérivation (S2) du module de stockage d'énergie quelconque, dans lequel
le paramètre du groupe d'éléments de stockage d'énergie comprend l'un ou plusieurs parmi un temps de charge/décharge, un état de charge SOC, une profondeur de décharge DOD, un état de santé SOH, et une tension de port.

24. Procédé de commande selon la revendication 19 ou 21, dans lequel le procédé comprend en outre :
lorsque le système de surveillance centralisé détecte, en utilisant la BMU du module de stockage d'énergie (11, 12, ... 1n) quelconque, que le groupe d'éléments de stockage d'énergie dans le module de stockage d'énergie quelconque a une anomalie, la désactivation, par la BMU du module de stockage d'énergie quelconque, du commutateur de commande principal (S1) du module de stockage d'énergie quelconque et l'activation du commutateur de dérivation (S2), dans lequel l'anomalie du groupe d'éléments de stockage d'énergie comprend : un SOH du groupe d'éléments de stockage d'énergie est inférieur à un seuil de SOH, un court-circuit se produit dans le groupe d'éléments de stockage d'énergie, ou une surchauffe se produit dans le groupe d'éléments de stockage d'énergie.

25. Procédé de commande selon l'une quelconque des revendications 22 à 24, dans lequel le procédé comprend en outre :
lorsque le système de surveillance centralisé reçoit une demande d'ajustement de courant en provenance de la BMU du module de stockage d'énergie (11, 12, ... 1n) quelconque, la commande du convertisseur CC/CC pour réduire un courant de charge/décharge du groupement d'unités de stockage d'énergie ; et
lorsque le système de surveillance centralisé détecte, en utilisant la BMU du module de stockage d'énergie quelconque, que le courant de charge/décharge de batterie est égal à un seuil de courant prédéfini, l'activation ou la désactivation, par la BMU du module de stockage d'énergie quelconque, du commutateur de commande principal ou du commutateur de dérivation du module de stockage d'énergie quelconque, dans lequel le seuil de courant prédéfini est de 50 %, 20 %, ou 10 % d'un courant de fonctionnement nominal du groupement d'unités de stockage d'énergie.
